# EUROPÄISCHE PATENTSCHRIFT

(11) **EP 1 566 309 B1**
(45) Veröffentlichungstag und Bekanntmachung des Hinweises auf die Patenterteilung: **28.06.2006**
(21) Anmeldenummer: 04030950.2
(22) Anmeldetag: 29.12.2004
(51) Int. Cl.: B60R 5/00

(54) **Transportbehälter für Fahrzeuge für den sitzlehnen- oder kofferraumwandseitigen Einbau in Personenkraftwagen**
Vehicle transport box fixable on backseat or on the wall of the boot
Boîtier de transport pour véhicule pour fixation sur dossier de siège ou paroie intérieur de coffre

(30) Priorität: 20.02.2004 DE 102004008828
(43) Veröffentlichungstag der Anmeldung: 24.08.2005
(73) Patentinhaber: BOS GmbH & Co. KG, 73760 Ostfildern (DE)
(72) Erfinder: Reisinger, Alexander, 40764 Langenfeld (DE); Salewski, Jürgen, 40599 Düsseldorf (DE); Sitzler, Wolfgang, 42111 Wuppertal (DE); Bohlke, Hartmut, 42369 Wuppertal (DE)
(74) Vertreter: Ostriga, Sonnet, Wirths & Roche

(56) Entgegenhaltungen:
- DE-A1- 3 625 666
- DE-A1- 10 132 081
- US-A- 5 628 543

## Beschreibung

Die Erfindung betrifft eine Transportbehälter-Einrichtung wie z.B. Durchlade-Einrichtung, insbesondere für den sitzlehnen- oder kofferraumwandseitigen Einbau in Personenkraftwagen gemäß dem Oberbegriff des Anspruch 1.

Eine derartige Transportbehälter-Einrichtung der Anmelderin, von der die Erfindung ausgeht, ist aus der DE 101 32 081 A1 bekannt. Die dort beschriebene Transportbehälter-Einrichtung hat sich im vielfachen Einsatz bewährt. Der bekannte Transportbehälter umfaßt einen Einbaurahmen, der mit seinem freien Ende, welches als Einsteckende oder als vorauseilendes Ende bezeichnet werden kann, durch den fahrzeugseitige Halterahmen hindurchgesteckt wird, bis es zu einem Anschlagen der einbaurahmenseitigen Schwenklagerstelle S an die halterrahmenseitige Schwenkwiederlagerstelle SW kommt (vgl. Fig. 5 der DE 101 32 081 A1). Die auf diese Weise gebildete Schwenkachse ermöglicht nachfolgend eine Verschwenkung des Einbaurahmens um diese Schwenkachse in seine Einbauposition gemäß Fig. 8 der DE 101 32 081 A1.

Von diesem Stand der Technik ausgehend liegt der Erfindung die Aufgabe zugrunde, die bekannte Transportbehälter-Einrichtung für Fahrzeuge derartig weiterzubilden, daß bei verbesserter Handhabung geringere Einbautiefen möglich sind.

Die Erfindung löst diese Aufgabe mit den Merkmalen des Anspruches 1, insbesondere mit denen des Kennzeichenteils, und ist demgemäß dadurch gekennzeichnet, daß die Schwenklagerstelle in einem Bereich eines bei einer Einsetzbewegung des Einbaurahmens vorauseilenden Randes des Einbaurahmens angeordnet ist, wobei die Schwenkachse im wesentlichen parallel zu dem Randbereich verläuft, wobei im Bereich der Schwenklagerstelle Halteflächen angeordnet sind, die über die lichte Weite des Halterahmens in Richtung der Schwenkachse hinausragen, und wobei an dem Halterahmen Führungsflächen für die Halteflächen angeordnet sind.

Das Prinzip der Erfindung besteht somit im wesentlichen darin, die Schwenkachse, die gemäß der DE 101 32 081 A1 zwischen den beiden Querschenkeln des Einbaurahmens angeordnet ist, nunmehr in den Bereich eines Rahmenschenkels des Einbaurahmens, vorzugsweise in den Bereich des unteren Rahmenschenkels, zu verlagern. Vorzugsweise befindet sich die Schwenklagerstelle nunmehr in einem unteren Eckbereich des Einbaurahmens und kann beispielsweise an einem von dem Einbaurahmen hervorkragenden Flansch angeordnet sein. Erfindungsgemäß wird ein Hindurchtauchen des Einsteckendes des Einbaurahmens, also des bezüglich der Fig. 5 der DE 101 32 081 A1 unteren Querschenkels durch den Halterahmen, verhindert bzw. entbehrlich. Die Erfindung erkennt dabei, daß bei dem bekannten Einbaurahmen dessen Einsteckende verhältnismäßig weit in den Halterahmen hineingesteckt bzw. durch diesen hindurchgesteckt werden muß, um aus Schwenklagerstelle und Schwenkwiderlagerstelle die Schwenkachse zu bilden. Dies deutet Fig. 5 der DE 101 32 081 A1 an.

Die Anordnung der Schwenklagerstelle an einem vorauseilenden Endbereich des Einbaurahmens ermöglicht gleichermaßen die Anordnung einer Schwenkwiderlagerstelle an einem unteren Randbereich des Halterahmens. Eine Schwenkbewegung des Einbaurahmens relativ zu dem Halterahmen kann auf Grund der geänderten Geometrie nunmehr derart erfolgen, daß das Einsteckende bzw. der untere Querschenkel des Einbaurahmens während der Verschwenkung des Einbaurahmens im wesentlichen innerhalb einer Hüllkurve des Halterahmens verbleibt. Die erforderliche Einbautiefe des Halterahmens kann damit deutlich verringert werden und ermöglicht z.B. auch den Einbau in eine Seitenwand eines PKW's.

Gleichermaßen ist für den Fall, daß die Transportbehälter-Einrichtung sitzlehnenseitig bzw. kofferraumwandseitig angebracht ist, ein Einsetzen des Einbaurahmens nunmehr auch möglich, wenn der Kofferraum voll beladen ist. Die Einsetzbewegung des Einbaurahmens ist durchführbar, ohne daß wesentliche Bereiche oder Teile des Einbaurahmens während der Einsetzbewegung durch den Halterrahmen hindurchgreifen und rückseitig aus dem Halterahmen herausragen.

Die Erfindung sieht auch vor, daß im Bereich der einbaurahmenseitigen Schwenklagerstelle Halteflächen angeordnet sind. Diese ragen über die lichte Weite des Halterahmens in Richtung der Schwenkachse hinaus und verhindern auf diese Weise ein Eintauchen der Schwenklagerstelle in den Innenraum des Halterahmens hinein und ein Durchtauchen des vorauseilenden Einsteckendes des Einbaurahmens durch den Halterahmen hindurch. Die gegenüber dem Einbaurahmen, also der eigentlichen Zarge, seitlich vorragenden, also exponierten Halteflächen, können darüber hinaus mit Führungsflächen an dem Halterahmen zusammenwirken. So kann beispielsweise an dem Halterahmen ein umlaufender stufenartiger Absatz vorgesehen sein, der sich vorzugsweise über die gesamte Länge der Längsschenkel des Halterrahmens erstreckt. Der Einbaurahmen kann mit seinem Einsteckende voraus an eine beliebige Position des stufigen Absatzes angesetzt werden, und über den Absatz, der auf diese Weise eine Führungsfläche darstellt, hinab geführt werden, bis die einbaurahmenseitige Schwenklagerstelle auf die Schwenkwiderlagerstelle des Halterrahmens an dessen unterem Rahmenschenkel auftrifft. Nachfolgend kann die Verschwenkbewegung erfolgen, um das Einbaumodul halterahmenseitig festzulegen. Die Handhabung ist somit komfortabel und einfach. Ein Zielvorgang ist nicht mehr erforderlich.

Die Erfindung ermöglicht darüber hinaus die Anbringung eines im wesentlichen vollständig umlaufenden Randflansches an dem Einbaurahmen. Dies ermöglicht einen in ästhetischer Hinsicht vorteilhaften optischen Abschluß und vermeidet störende Fugenbilder. Außerdem kann ein kragenartiger, im wesentlichen umlaufender Randflansch, mit Werkstoffbereichen des Halterahmens in eine derartige Überdeckung gebracht werden, daß eine vollständige Dichtigkeit, insbesondere Blickdichtigkeit, des Zwischenraumes zwischen Einbaurahmen und Halterahmen erreicht wird.

Im Gegensatz zu der Transportbehälter-Einrichtung des Standes der Technik gemäß der DE 101 32 081 A1, bei der ein zielgerichtetes Ansetzen des Einbaurahmens an den Halterahmen erforderlich war, kann bei der erfindungsgemäßen Transportbehälter-Einrichtung der Einbaurahmen an einer beliebigen Position entlang der Längsschenkel des Halterahmens an den Halterahmen angesetzt werden und erreicht automatisch, von den Führungsflächen geführt, eine Schwenk-Ausgangsposition relativ zu dem Halterahmen, in der die Schwenkachse durch Anliegen von Schwenklagerstelle und Schwenkwiderlagerstelle gebildet und ein Verschwenken des Einbaurahmens in seine Montageposition möglich ist.

Aus der DE 37 389 31 C2 ist eine Vorrichtung zum Transport von Skiern bekannt, bei der ein Einbaurahmen einen einen Anschlag bildenden flanschartigen Rand aufweist, welcher einen Gegenanschlag eines karosserieseitigen Halterahmens übergreift. Der Halterahmen gemäß der DE 37 389 31 C2 ist von festen Karosserieteilen gebildet und stellt gemäß Fig. 4 eine sich im wesentlichen über die gesamte Fahrzeugbreite erstreckende Öffnung bereit. Der Einbaurahmen wird lediglich mit seinem oberen Flansch und seinem unteren Flansch an dem Halterahmen befestigt. Halteflächen, die über die lichte Weite des Halterahmens in Richtung der Schwenkachse hinausragen, sind aus dieser Druckschrift nicht bekannt. Auch Führungsflächen für die Halteflächen an dem Halterahmen sind nicht vorgesehen. Bei dieser Vorrichtung ist eine Befestigung des Einbaurahmens an dem Halterahmen aufwendig und unkomfortabel, da ein sehr zielgerichtetes Einsetzen des Einbaurahmens an den Halterahmen erforderlich ist. Für einen häufigen und unkomplizierten Wechsel eines Einbaurahmens ist diese Vorrichtung nicht geeignet.

Gemäß einer vorteilhaften Ausgestaltung der Erfindung sind Halterahmen und/oder Einbaurahmen umlaufend ausgebildet und umfassen jeweils zwei Längsschenkel sowie zwei Querschenkel. Dies berücksichtigt eine herkömmliche Bauform einer Transportbehälter-Einrichtung, bei der Einbaurahmen und Halterahmen im wesentlichen rechteckig ausgebildet sind und ermöglicht teilweise eine Verwendung herkömmlicher Bauteile. Für den Fall, daß die Transportbehälter-Einrichtung beispielsweise als Durchladeeinrichtung ausgebildet ist, sind üblicherweise die beiden Längsschenkel, die im Einbauzustand im wesentlichen vertikal ausgerichtet bzw. an die Neigung der Rücklehne angepaßt sind, länger als die beiden Querschenkel. Gleichermaßen sind für den Fall, daß die Transportbehälter-Einrichtung eine andere Funktion wahrnimmt, und beispielsweise der Aufnahme und dem Transport einer Spielkonsole dient, jedoch auch andere Rahmenformen, beispielsweise quadratische Rahmenformen, möglich.

Die Erfindung schließt zwar nicht aus, daß die Schwenkachse bei in Einbausituation befindlichem Einbaurahmen im wesentlichen vertikal ausgerichtet ist oder eine andere Neigung aufweist. Vorzugsweise ist die Schwenkachse jedoch im wesentlichen horizontal ausgerichtet, da dies eine besonders komfortable Handhabung ermöglicht. Weiter vorzugsweise ist die Schwenkachse im Bereich des unteren Rahmenschenkels des Einbaurahmens angeordnet, so daß sich der Benutzer beim Einsetzen des Einbaurahmens in den Halterahmen die Schwerkraft zu nutze machen kann und einen erhöhten Bedienkomfort erfährt.

Gemäß einer weiteren vorteilhaften Ausgestaltung der Erfindung weist der Einbaurahmen einen kragenartigen Randflansch auf. Dies ermöglicht eine besonders einfache Konstruktion, da die einbaurahmenseitige Schwenklagerstelle an dem Randflansch angeordnet werden kann. Zugleich kann ein Randflansch einer Überdeckung mit Werkstoffbereichen des Halterahmens dienen, so daß eine Dichtigkeit, insbesondere eine Blickdichtigkeit oder Zugluftdichtigkeit erreicht werden kann.

Gemäß einer weiteren vorteilhaften Ausgestaltung der Erfindung erstreckt sich der Randflansch zumindest entlang zweier Längsschenkel und eines Querschenkels des Einbaurahmens, wobei zur Erreichung einer Blickdichtigkeit ein derartiger, im wesentlichen U-förmiger Randflansch theoretisch genügt. Zur Erreichung eines besonders sauberen Fugenbildes und eines damit vortrefflichen ästhetischen Gesamteindruckes ist der Randflansch jedoch vorzugsweise im wesentlichen vollständig umlaufend ausgebildet.

Der zuvor erwähnte Randflansch kann sich entlang des gesamten Umfanges des Einbaurahmens erstrecken oder, falls sich der Randflansch lediglich entlang zweier Längsschenkel und eines Querschenkels des Einbaurahmens erstreckt, entlang dieser Schenkel erstrecken. Eine radiale Überdeckung des Randflansches mit Werkstoffbereichen des Halterahmens sorgt für die gewünschte Dichtigkeit. Insbesondere besteht die Möglichkeit, den Randflansch in Überdeckung zu den halterahmenseitigen Führungsflächen anzuordnen. Die Führungsflächen können auf diese Weise auch Anlageflächen für den Randflansch bereitstellen.

Gemäß einer weiteren vorteilhaften Ausgestaltung der Erfindung sind die Halteflächen an dem Randflansch angeordnet. Dies ermöglicht eine besonders einfache Konstruktion der erfindungsgemäßen Transportbehälter-Einrichtung.

Gemäß einer vorteilhaften Ausgestaltung der Erfindung weist der Halterahmen einen stufenartigen Absatz auf. Der stufenartige Absatz kann auf vorteilhafte Weise der Kontaktierung des Randflansches dienen, so daß die Transportbehälter-Einrichtung einen bündigen Abschluß zwischen Halterahmen und in Einbauposition befindlichem Einbaurahmen aufweisen kann. Zugleich kann der Absatz die Führungsflächen aufweisen, so daß eine besonders einfache Konstruktion möglich wird.

Weitere Vorteile der Erfindung ergeben sich aus den nicht zitierten Unteransprüchen sowie an Hand der nun folgenden Beschreibung eines in den Figuren dargestellten Ausführungsbeispieles. Darin zeigen:
- Fig. 1: in perspektivischer, schematischer Ansicht eine als Durchladeeinrichtung ausgebildete Transportbehälter-Einrichtung mit einem fahrzeugseitig festgelegtem Halterahmen ohne die fahrzeugseitige Befestigungsstelle und ein davon gelöstes, als Skisack-Modul ausgebildetes Transportbehältnis mit einem Einbaurahmen,
- Fig. 2: das Transportbehältnis der Fig. 1 in Vorderansicht,
- Fig.3: in schematischer, teilgeschnittener Ansicht den Halterahmen und das darin eingesetzte Transportbehältnis mit Einbaurahmen etwa gemäß Schnittlinie III - III in Fig. 1,
- Fig. 4: einen Querschnitt durch das in Einbausituation befindliche Transportbehältnis mit Einbaurahmen sowie durch den Halterahmen etwa gemäß Schnittlinie IV- IV in Fig. 1,
- Fig. 5: in schematischer, perspektivischer Schräg-Vorderansicht den fahrzeugseitigen Halterahmen,
- Fig. 6: in schematischer, teilgeschnittener Ansicht eine als Durchladeeinrichtung ausgebildete Transportbehälter-Einrichtung, die an einer Kfz-Fondlehne befestigt ist sowie ein Transportbehältnis mit einem Einbaurahmen, welches von einem Benutzer gegriffen wird, vor dem Einsetzen, und
- die Fig. 7 - 10: in einer Darstellung gemäß Fig. 6 verschiedene Stadien des Einsetzvorganges.

Die erfindungsgemäße Transportbehälter-Einrichtung wird in den Figuren in ihrer Gesamtheit mit 10 bezeichnet. In der nun folgenden Beschreibung der Transportbehälter-Einrichtung sind gleiche oder vergleichbare Teile oder Elemente mit gleichen Bezugsziffern, teilweise unter Anhängung kleiner Buchstaben versehen.

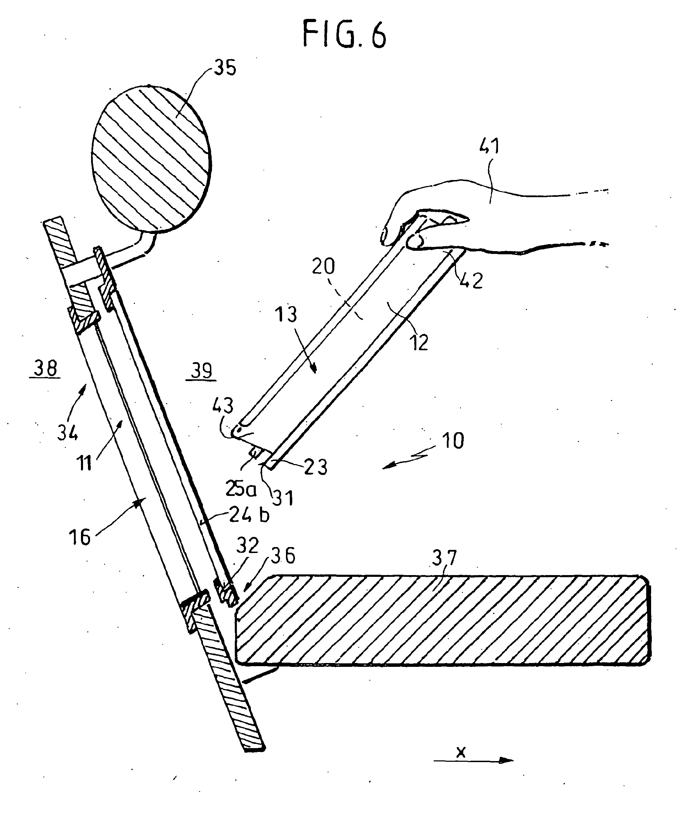

Gemäß dem Ausführungsbeispiel ist die Transportbehälter-Einrichtung 10 als Durchladeeinrichtung ausgebildet und umfaßt ein Transportbehältnis 12 mit einem Einbaurahmen 13. Das Transportbehältnis dient dem Einbau in einen Halterahmen 11, der an einer Kfz-Fondlehne 34 gemäß Fig. 6 befestigt ist. Die Lehne 34 sowie bei Bedarf auch der Halterahmen 11 können mit einer schematisch dargestellten Kopfstütze 35 verbunden sein. Gleichermaßen kann auch eine in Fig. 6 angedeutete Armlehne 37 vorgesehen sein, die um eine etwa im Bereich 36 befindliche Schwenkachse verschwenkbar ist und in ihrer nicht dargestellten, im wesentlichen vertikalen Schwenkposition den Transport-Behälter 12 fahrgastzellenseitig abdecken kann.

Es sei angemerkt, daß gemäß Fig. 6 die Fahrtrichtung des Fahrzeuges mit x bezeichnet ist. Die Durchladeeinrichtung dient demnach zum Durchführen von länglichen Gegenständen, wie beispielsweise Skiern, aus dem Laderaum 38 bis in den Fahrgastraum 39 hinein. Ein als Skisackbehältnis ausgebildetes Transportbehältnis 12 weist dafür in seinem Innenraum 20 einen nicht dargestellten Skisack auf und entspricht somit von seinem grundsätzlichen Aufbau und seiner Funktion dem Transportbehältnis gemäß der DE 101 32 081 A1.

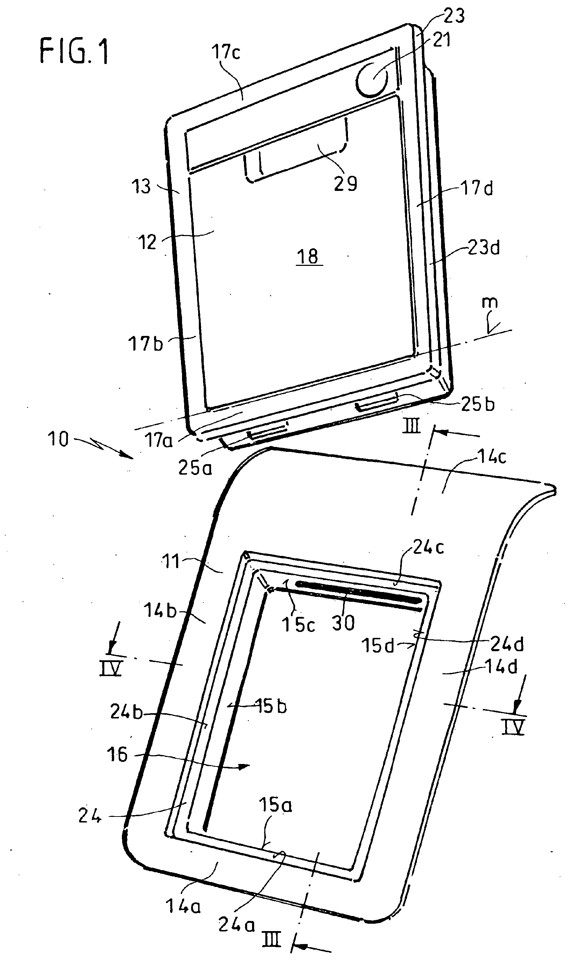

Gemäß beispielsweise der Fig. 1 ist das Transportbehältnis 12 im wesentlichen rechteckig ausgebildet und umfaßt einen im wesentlichen rechteckförmigen Einbaurahmen 13. Der Einbaurahmen dient zum Einsetzen in einen fahrzeugseitigen, insbesondere von der Karosserie des Fahrzeugs gesonderten Halterahmen 11, der ebenfalls einem im wesentlichen rechteckförmigen Querschnitt aufweist und vier Rahmenschenkel 14a, 14b, 14c, 14d umfaßt. Die oberen und unteren Rahmenschenkel 14c, 14a werden als Querschenkel und die seitlichen Schenkel 14b, 14d werden als Längsschenkel bezeichnet. Der Durchladekanal 16 wird von den Innenflächen 15a, 15b, 15c, 15d des Halterahmens 11 begrenzt.

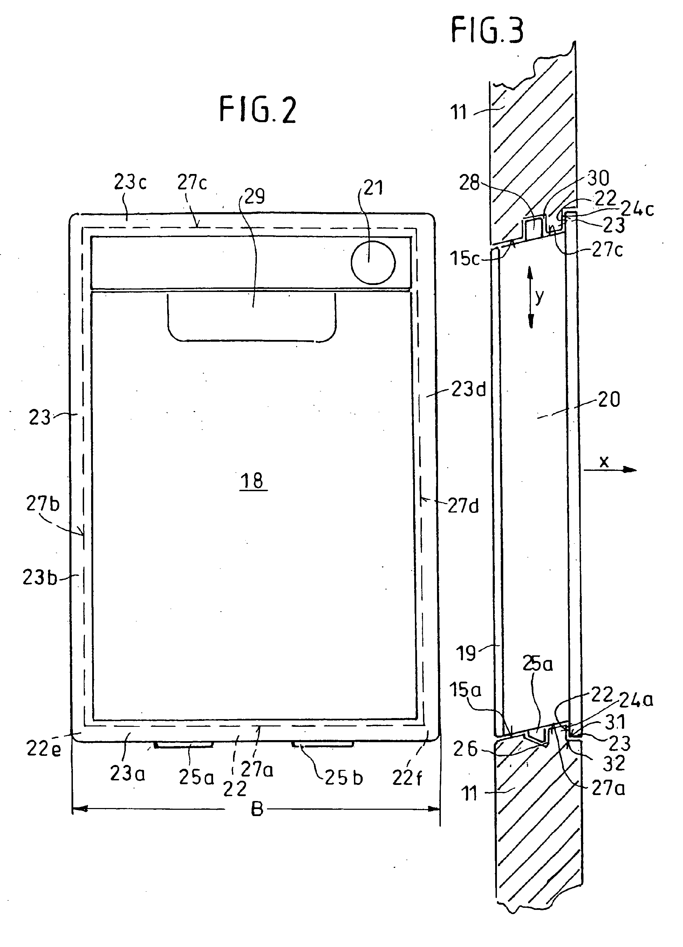

Das Transportbehältnis 12 gemäß dem Ausführungsbeispiel besteht, wie sich aus den Fig. 1, 2, 4 und 6 ergibt, aus einem vorderen, um eine Achse m schwenkbaren Deckel 18, einem hinteren, um eine parallele, nicht dargestellte Achse schwenkbaren Deckel 19 und dem Einbaurahmen 13, der vier Schenkel 17a, 17b, 17c, 17d aufweist. Die vier Schenkel 17a, 17b, 17c, 17d umgrenzen gemeinsam mit den beiden Deckeln 18, 19 einen Innenraum 20 des Transportbehältnisses 12, in dem der nicht dargestellte Skisack üblicherweise zusammengefaltet aufbewahrt wird. Ein in den Fig. 1 und 3 angedeutetes Betätigungselement 21 nach Art eines Druckknopfs ermöglicht einem Benutzer das Öffnen der Deckel 18 und 19, so daß der Skisack entnommen, entfaltet und beispielsweise längliches Ladegut vom Laderaum 38 her in die Fahrgastzelle 39 durchsteckt werden kann.

An dieser Stelle sei angemerkt, daß das Ausführungsbeispiel lediglich beispielhaft zu verstehen ist. An Stelle eines als Skisackmodul ausgebildeten Transportbehältnisses können erfindungsgemäß auch Kühlmodule, Spiel-Konsolen-Module, Module für Unterhaltungsgeräte wie DVD-Player etc. verwendet werden. Wie von anderen Transportbehälter-Einrichtungen her bekannt, kann auch bei der erfindungsgemäßen Transportbehälter-Einrichtung der Einbaurahmen Teil oder Einbauteil eines beliebigen Behältermoduls od. dgl. sein.

Der Einbaurahmen 13 ist gemäß dem Ausführungsbeispiel mit einem umlaufenden, kragenartigen, nach außen vorstehenden Randflansch 23 ausgestattet. Der umlaufende Randflansch weist in Zuordnung zu den Schenkeln 17a, 17b, 17c, 17d des Einbaurahmens 13 entsprechende Bereiche 23a, 23b, 23c und 23d auf. Der Randflansch 23 kann mit einer halterahmenseitigen Absatzstufe 24 zusammenwirken. Hierzu ist in dem in Fahrtrichtung x vorderen Mündungsbereich des Durchladekanales 16 eine radiale Erweiterung vorgesehen. Der Absatz 24 ist umlaufend ausgebildet und weist vier Absatzflächen 24a, 24b, 24c, 24d in entsprechender Zuordnung zu den Schenkeln 14a, 14b, 14c, 14d auf.

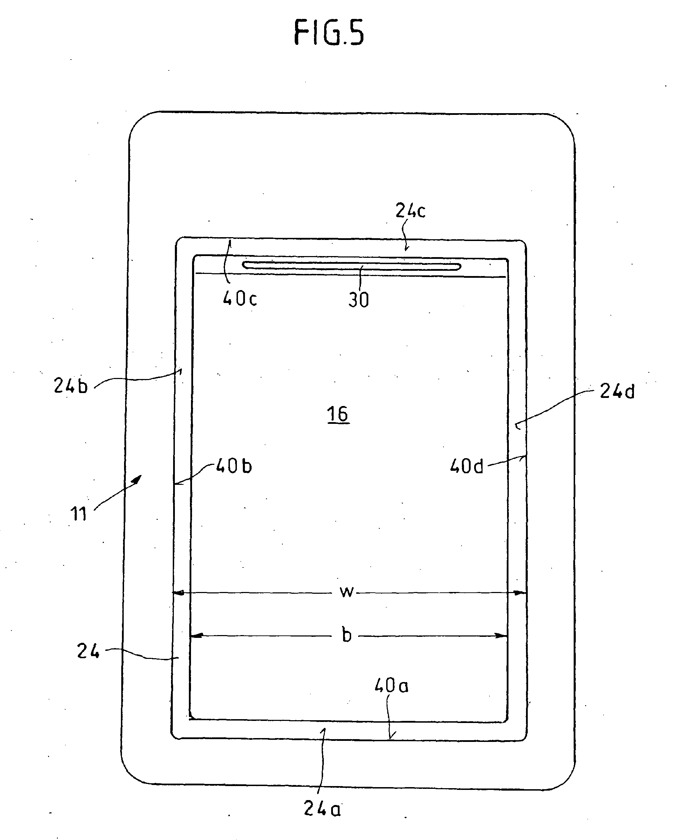

Der stufenartige Absatz 24 ist auf die Ausmaße des Randflansches 23 abgestimmt. Gemäß Fig. 2 weist der Einbaurahmen 13 eine Breite B auf, die die lichte Weite b des Halterahmens 11 (Fig. 5), und somit die Breite der Durchladeöffnung 16, übersteigt. Die Breite der stufenartigen Absätze 24 ist derart gewählt, daß der Abstand w zwischen den Begrenzungsflächen 40b, 40d des stufenartigen Absatzes 24 im wesentlichen der Breite B des Einbaurahmens 13 entspricht. Der Randflansch 23 kann sich auf diese Weise in die Absatzstufe 24 einsetzen. Der Randflansch 23 kontaktiert im Einbauzustand mit seiner Rückseite 22 (Fig. 3) die entsprechende Fläche 24a, 24b, 24c, 24d des Absatzes 24. Dabei ist insbesondere hervorzuheben, daß die in Fig. 2 angedeuteten unteren Eckbereiche 22e und 22f der Rückseite 22 des Randflanschbereiches 23a die Halteflächen oder Halteflächenbereiche darstellen, die ein zu tiefes Eintauchen oder ein Hindurchtauchen des Einbaurahmens 13 durch den Halterahmen 11 hindurch verhindern. Die Halteflächen 22e und 22f, können im Rahmen einer weiter unten beschriebenen Einsetzbewegung an eine beliebige Stelle der Absatzflächen 24b, 24d herangeführt und entlang dieser Flächen hinabgleitend verlagert werden, bis die einbaurahmenseitige Schwenklagerstelle 31 mit der halterahmenseitigen Schwenkwiderlagerstelle 33 die Schwenkachse 33 bildet. Die Flächen 24b und 24d des Absatzes 24 stellen auf diese Weise Führungsflächen für die Halteflächen 22e, 22f bereit.

Der Vollständigkeit halber sei darauf hingewiesen, daß die Rückseite 22 des Randflansches 23 in Rückseitenbereiche 22a, 22b, 22c, 22d in Zuordnung zu den entsprechenden Randflanschbereichen 23a, 23b, 23c, 23d unterteilt ist.

Im Bereich des unteren Querschenkels 17a des Einbaurahmens 13 sind, wie sich beispielsweise aus den Fig. 1, 2 und 3 ergibt, zwei feststehende Riegelzapfen 25a und 25b angeordnet. Diese können in zwei korrespondierende, in Fig. 3 lediglich angedeutete Aufnahmen 26 eintauchen.

In diesem Zusammenhang erscheint erwähnenswert, daß die Außenumfangsflächen 27a und 27c des Einbaurahmens 13 (Fig. 3) sowie gleichermaßen die Innenumfangsflächen 15a und 15c des Halterahmens 11 bezogen auf die Fahrtrichtung X des Fahrzeuges geringfügig geneigt sind. Die Neigung entspricht dabei im wesentlichen der bereits aus der DE 101 32 081 A1 bekannten Neigung und ermöglicht ein großflächiges, sattes Anliegen der Flächen 15a, 15; 27a, 27c aneinander.

Die von der Außenumfangsfläche 27a des Einbaurahmens 13 vorspringenden Riegelzapfen 25a und 25b sind vorteilhaft, jedoch nicht erforderlich. Sie dienen im wesentlichen einer erhöhten Crashsicherheit.

Erfindungsgemäß erforderlich ist ein bei dem Ausführungsbeispiel in dem Bereich des oberen Querschenkels 17c des Einbaurahmens angeordnetes, lediglich schematisch dargestelltes Riegelelement 28 (Fig. 3). Dieses ist entlang der Richtung des Doppelpfeils Y durch ein wiederum lediglich schematisch angedeutetes Betätigungselement 29, das ebenfalls in der DE 101 32 081 A1 beschrieben ist, verlagerbar. Dem verlagerbaren Riegelelement 28 ist eine Ausnehmung 30 in der Innenumfangsfläche 15c des Halterahmens 11 zugeordnet.

Die in Fig. 3 deutlich erkennbare freie Randkante 31 des Randflansches 23 bzw. des Bereiches 23a, der dem unteren Schenkel 17a des Einbauraums 13 zugeordnet ist, bildet erfindungsgemäß die Schwenklagerstelle aus. Diese wirkt mit einer halterahmenseitigen, im Bereich der unteren Absatzfläche 24a angeordneten Schwenkwiderlagerstelle 32 zusammen und bildet auf diese Weise eine Schwenkachse 33.

An Hand der Figuren 6 bis 10 soll nunmehr der Einsetzvorgang der erfindungsgemäßen Transportbehälter-Einrichtung 10 detailliert erläutert werden:

Fig. 6 deutet die Hand 41 eines Benutzers an, mit der ein Greifende 42 des Transportbehältnisses 12 bzw. des Einbaurahmens 13 ergriffen worden ist. Das Greifende 42 ist von dem Einsteckende 43 des Transportbehältnisses 12, also dem vorauseilenden Ende oder dem vorauseilenden Randbereich, distanziert angeordnet.

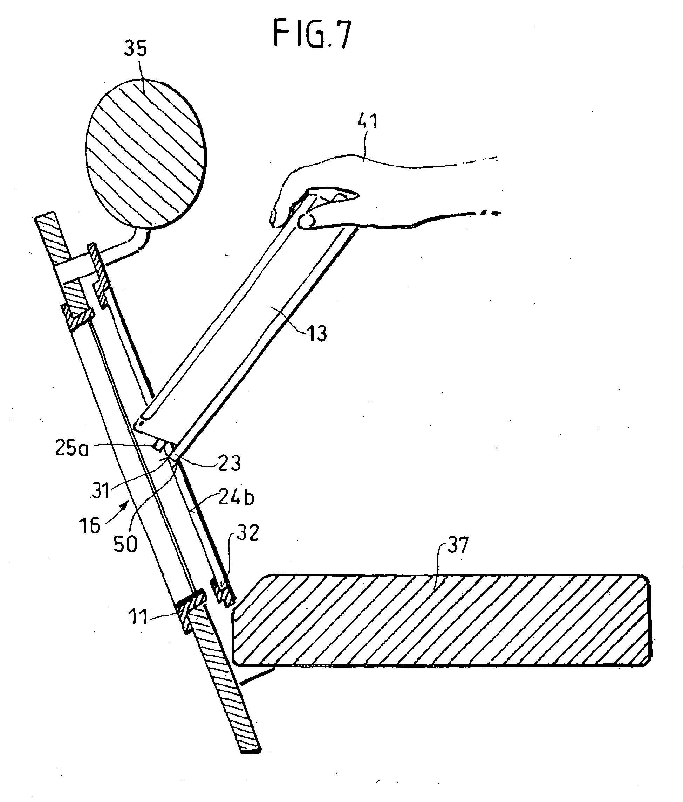

Der Einbaurahmen 13 wird mit seinem Einsteckende 43 ausgehend von einer Position gemäß Fig. 6 zum Einsetzen in den Halterahmen 11 zunächst fortwährend auf den Halterahmen 11 zu bewegt, bis es zu einem Kontakt des Flanschrandes 23 bzw. dessen als Schwenklagerstelle ausgebildeten Kante 31 und den Halteflächen 22e, 22f einerseits mit den Flächen 24b bzw. 24d des stufenartigen Absatzes andererseits kommt (Fig. 7). Der Schwenklagerstelle 31 sind somit Halteflächen 22e, 22f zugeordnet, die auf Grund der Kontaktierung mit den Absatzflachen 24b, 24d einen Durchtritt des Einbaurahmens 13 durch die Durchladeöffnung 16 hindurch verhindern.

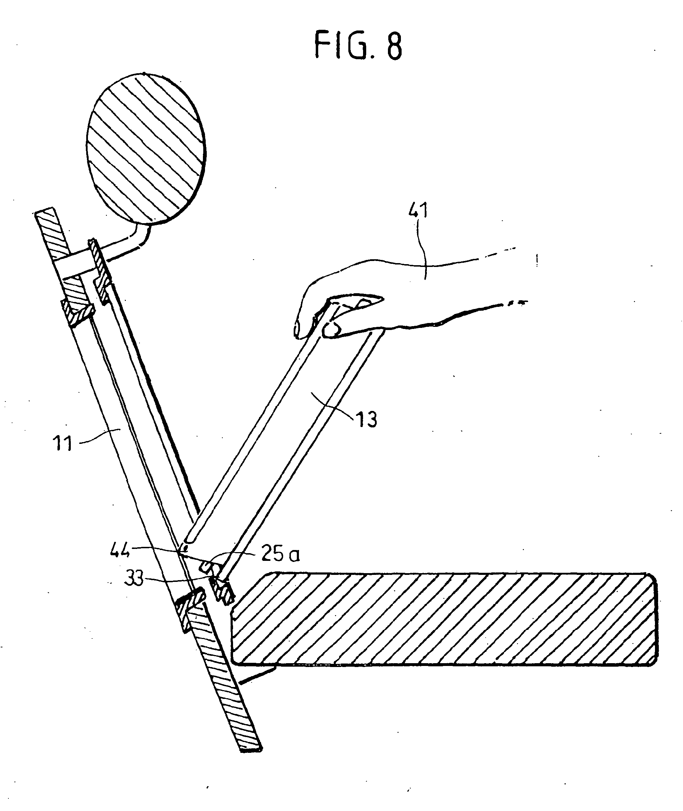

Desweiteren sind die Absatzflächen 24b, 24d als Führungsflächen für die Halteflächen 22e, 22f ausgebildet und ermöglichen ein geführtes Hinabgleiten des Einbaurahmens 13 von einer Position gemäß Fig. 7 in eine Position gemäß Fig. 8, in der die Kante 31 des Einbaurahmens 13 in den Bereich der entsprechenden Schwenkwiderlagerstelle 32 (Fig. 7) des Halterahmens 11 gelangt und auf diese Weise eine Schwenkachse 33 bildet. Bei detaillierter Betrachtung stellt man fest, daß es zu einem Anschlagen einer zweiten freien Kante 50 des Bereiches 23a des Randflansches 23 an der Bodenwand 40a (Fig. 5) des Absatzes 24 kommt.

In der Anschlagsposition gemäß Fig. 8 befindet sich das bezüglich Fig. 8 untere, linke Eck 44 des Einbaurahmens 13 noch innerhalb der Hüllkurve des Halterahmens 11 und ragt insbesondere nicht aus dem Halterahmen 11 in den Laderaum 38 hinein vor. Als Hüllkurve im Sinne der vorliegenden Erfindung wird diejenige Kontur bezeichnet, die eine äußerste Umrißlinie einer Seitenansicht des Halterahmens, beispielsweise gemäß Fig. 8, bildet.

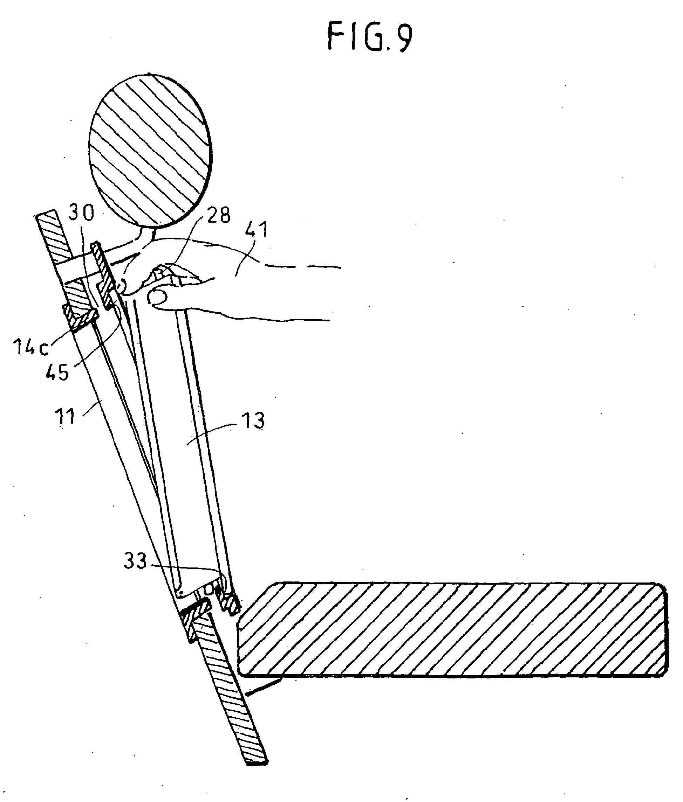

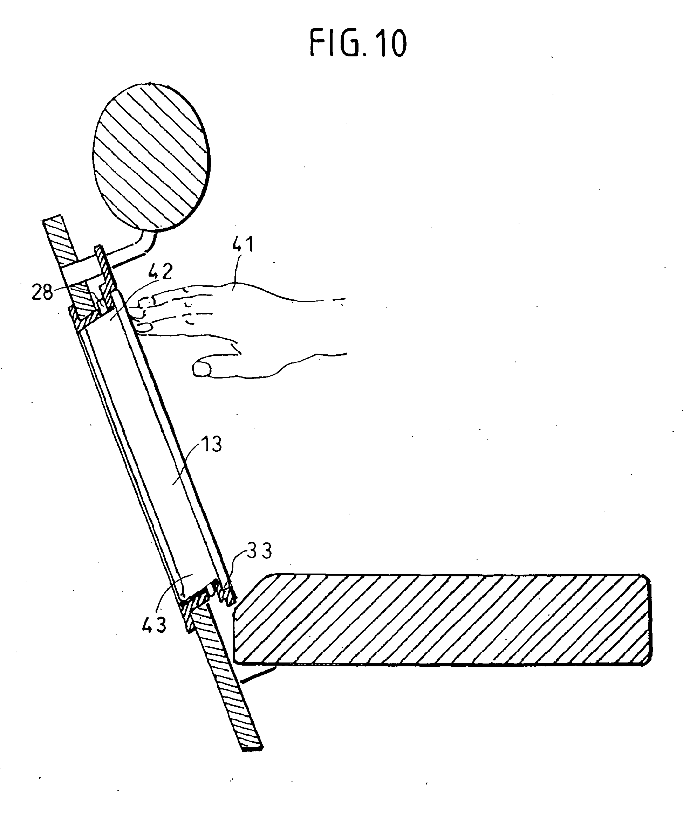

Während der nun nachfolgenden Schwenkbewegung kann der Benutzer den Einbaurahmen 13 entgegen dem Uhrzeigersinn um die Schwenkachse 33 verschwenken. Fig. 9 zeigt eine Zwischenposition und Fig. 10 zeigt die Einbausituation, in der das Greifende 42 des Einbaurahmens 13 an dem oberen Halterahmenschenkel 14c anliegt.

Der verlagerbare Riegel 28 kann als Schnapphaken ausgebildet sein, der bei Kontaktierung einer entsprechenden Gegenfläche (z.B. 45) automatisch einfährt und bei Erreichen der Einbausituation gemäß Fig. 10 zurückschnappt. Alternativ kann auch vorgesehen sein, daß der Benutzer die in Fig. 9 nicht dargestellte Betätigungstaste 29 oder ein vergleichbares Betätigungselement zum Einfahren des Riegels 28 betätigen muß, um ausgehend von einer Position gemäß Fig. 9 die Einposition gemäß Fig. 10 zu erreichen.

Hervorzuheben ist, daß das verlagerbare Riegelelement 28 selbstverständlich auch in einem anderen Bereich als dem oberen Halterahmenschenkel 14c wirksam sein kann. Gleichermaßen können mehrere verlagerbare Riegelelemente 28 vorgesehen werden.

Selbstverständlich ist es dem Benutzer auch möglich, den Einbaurahmen unmittelbar zielgerichtet an den Halterahmen 11 anzusetzen, so daß ohne Durchführung einer Gleitbewegung der Halteflächen 22e, 22f bzw. der Schwenklagerstelle 31 an den Führungsflächen 24b, 24d entlang eine Kontaktierung von Schwenklagerstelle 31 und Schwenkwiederlagerstelle 32 erfolgt. Die Anordnung der Führungsflächen 24b, 24d ermöglicht jedoch ein Ansetzen des Einbaurahmens 13 mit seiner vorauseilenden Kante 31 an die Ansatzflächen 24b, 24d an einer beliebigen Stelle und ein besonders sicheres und einfaches Heranführen der Schwenklagerstelle 31 an die Schwenkwiderlagerstelle 32. Der Handhabungskomfort ist somit gegenüber dem Stand der Technik erhöht.

Insbesondere aus Fig. 6 wird deutlich, daß die Schwenklagerstelle 31 bzw. die Randkante 31 des unteren Bereiches 23a des Randflansches 23 nicht zwingend derjenige Werkstoffbereich des Einbaurahmens 13 ist, der als erster mit der Hüllkurve des Halterahmens 11 in Berührung kommt. Dies hängt nämlich auch von der Winkelstellung des Einbaurahmens 13 relativ zu dem Halterahmen 11 ab. Es versteht sich jedoch an Hand der Formulierungen und des in den Zeichnungen dargestellten Ausführungsbeispiels, daß als vorauseilender Rand des Einbaurahmens 13 im Sinne der Erfindung der von dem Greifende 42 distanzierte Randbereich 43 des Einbaurahmens 13 zu verstehen ist.

Wie sich aus den Figuren ergibt, ist die Schwenkachse 33 im wesentlichen parallel zu dem unteren Rahmenschenkel 17a des Einbaurahmens bzw. zu dem unteren Rahmenschenkel 14a des Halterahmens angeordnet. Die Schwenkachse 31 erstreckt sich dabei vorzugsweise über die gesamte Länge des Rahmenschenkels 17a, wodurch ein besonders stabiles und sicheres Schwenklager bereitgestellt wird.

Desweiteren ist anzumerken, daß, wie sich aus dem Zusammenspiel der Figuren 8 bis 10 nur ansatzweise ergibt, die einbaurahmenseitige Schwenklagerstelle 31 und die halterahmenseitige Schwenkwiderlagerstelle 32 während der Schwenkbewegung geringfügig verlagern können, so daß - mikroskopisch betrachtet - während einer Schwenkbewegung unterschiedliche Flächenpaare von Halterahmen 11 und Einbaurahmen 13 miteinander in Kontakt geraten können. Demzufolge wandert beispielsweise ausgehend von einer Situation gemäß Fig. 8 die halterahmenseitige Schwenkwiderlagerstelle 32 und damit gleichermaßen auch die Schwenkachse 33 während einer Verschwenkung des Einbaurahmens 13 in eine Position gemäß Fig. 9 geringfügig nach unten.

Neben der in den Zeichnungen dargestellten Einbausituation des Einbaurahmens 13 in einer Kfz-Fondlehne 34 ist gleichermaßen auch ein in einer Kfz-Seitenwand angebrachter Halterahmen möglich. Das Transportbehältnis 12 kann in diesem Fall beispielsweise als Staufachmodul od. dgl. ausgebildet sein und zum Zwecke eines Austausches mit einem anderen Modul lösbar an dem fahrzeugseitigen Halterahmen befestigt sein.

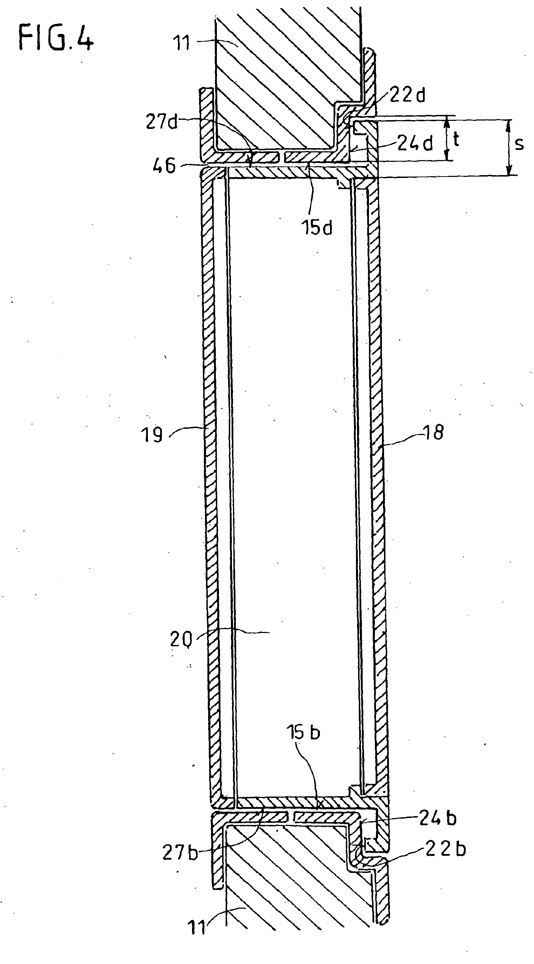

Abschließend soll an Hand der Fig. 4 noch erläutert werden, daß es auf Grund einer Anordnung des Randflansches 23 zu einer hervorragenden Abdeckung des Bewegungsspaltes 46 kommt. Gemäß Fig. 4 wird nämlich deutlich, daß der Randflansch 23 in Richtung der Schwenkachse 33 mit einem Überstand der ungefähren Breite s die Absatzstufenfläche 24 der Breite t etwa um den Betrag s-t überdeckt. Der Bewegungsspalt 46 wird somit vollständig dichtend verschlossen.

## Patentansprüche

1. Transportbehälter-Einrichtung (10) für Fahrzeuge, wie z.B. Durchlade-Einrichtung, insbesondere für den sitzlehnen- oder kofferraumwandseitigen Einbau in Personenkraftwagen, mit einem fahrzeugfesten Halterahmen (11), in den ein Einbaurahmen (13) eines Transportbehälters (12), wie Skisack, Kühlmodul, Spielkonsole od. dgl, einsetzbar ist, wobei dem Einbaurahmen eine Schwenklagerstelle (31) und dem Halterahmen eine Schwenkwiderlagerstelle (32) zugeordnet ist, wobei der Einbaurahmen (13) um die so gebildete Schwenkachse (33) in seine Einbauposition (Fig. 10) hinein schwenkbar ist, und wobei wenigstens ein in der Einbausituation des Einbaurahmens von der Schwenkachse (33) distanziert angeordnetes, verlagerbares Riegelelement (28) für eine lösbare Befestigung des Einbaurahmens an dem Halterahmen vorgesehen ist, **dadurch gekennzeichnet, daß** die Schwenklagerstelle (31) in einem Bereich (43) eines bei einer Einsetzbewegung des Einbaurahmens vorauseilenden Randes (31) des Einbaurahmens (13) angeordnet ist, wobei die Schwenkachse (33) im wesentlichen parallel zu dem Randbereich verläuft, wobei im Bereich der Schwenklagerstelle (31) Halteflächen (22e, 22f) angeordnet sind, die über die lichte Weite (b) des Halterahmens (11) in Richtung der Schwenkachse (33) hinausragen, und wobei an dem Halterahmen (11) Führungsflächen (24b, 24d) für die Halteflächen (22e, 22f) angeordnet sind.

2. Transportbehälter-Einrichtung nach Anspruch 1, **dadurch gekennzeichnet, daß** der Halterahmen (11) umlaufend ausgebildet ist und zwei Längsschenkel (14b, 14d) sowie zwei Querschenkel (14a, 14c) umfaßt.

3. Transportbehälter-Einrichtung nach Anspruch 1 oder 2, **dadurch gekennzeichnet, daß** der Einbaurahmen (13) umlaufend ausgebildet ist und zwei Längsschenkel (17b, 17d) sowie zwei Querschenkel (17a, 17c) umfaßt.

4. Transportbehälter-Einrichtung nach einem der Ansprüche 1 bis 3, **dadurch gekennzeichnet, daß** die Schwenkachse (33) im wesentlichen horizontal ausgerichtet ist.

5. Transportbehälter-Einrichtung nach einem der Ansprüche 1 bis 4, **dadurch gekennzeichnet, daß** die Schwenkachse (33) im Bereich eines unteren Rahmenschenkels (17a) des Einbaurahmens (13) angeordnet ist.

6. Transportbehälter-Einrichtung nach einem der vorangegangenen Ansprüche, **dadurch gekennzeichnet, daß** der Einbaurahmen (13) einen kragenartigen Randflansch (23) aufweist.

7. Transportbehälter-Einrichtung nach Anspruch 6, **dadurch gekennzeichnet, daß** sich der Randflansch (23) zumindest entlang zweier Längsschenkel (17b, 17d) und eines Querschenkels (17c) des Einbaurahmens (13) erstreckt.

8. Transportbehälter-Einrichtung nach Anspruch 6 oder 7, **dadurch gekennzeichnet, daß** der Randflansch (23) im wesentlichen vollständig umlaufend ausgebildet ist.

9. Transportbehälter-Einrichtung nach einem der vorangegangenen Ansprüche 6 bis 8, **dadurch gekennzeichnet, daß** die Schwenklagerstelle (31) an dem Randflansch (23) angeordnet ist.

10. Transportbehälter-Einrichtung nach Anspruch 9, **dadurch gekennzeichnet, daß** die Schwenklagerstelle (31) von einer freien Kante des Randflansches (23) gebildet ist.

11. Transportbehälter-Einrichtung nach einem der Ansprüche 6 bis 10, **dadurch gekennzeichnet, daß** die Halteflächen (22a, 22f) an dem Randflansch (23) angeordnet sind.

12. Transportbehälter-Einrichtung nach einem der vorangegangenen Ansprüche, **dadurch gekennzeichnet, daß** die Halteflächen (22e, 22f) derart angeordnet sind, daß sie ein Durchtauchen des Einbaurahmens, insbesondere eines Einsteckendes (43) des Einbaurahmens (13), durch den Halterahmen (11) hindurch verhindern.

13. Transportbehälter-Einrichtung nach einem der vorangegangenen Ansprüche, **dadurch gekennzeichnet, daß** die Halteflächen (22e, 22f) derart angeordnet sind, daß sie bei einer Einsetzbewegung des Einbaurahmens (13) in den Halterahmen (11) eine Schwenk-Bewegung des Einsteckendes (43) des Einbaurahmens (13) im wesentlichen auf einen Bereich innerhalb einer Hüllkurve des Halterahmens (11) begrenzen.

14. Transportbehälter-Einrichtung nach einem der vorangegangenen Ansprüche, **dadurch gekennzeichnet, daß** der Halterahmen einen stufenartigen Absatz (24, 24a, 24b, 24c, 24d) aufweist.

15. Transportbehälter-Einrichtung nach Anspruch 14, **dadurch gekennzeichnet, daß** sich der Absatz (24, 24a, 24b, 24c, 24d) zumindest entlang zweier Längsschenkel und eines Querschenkels des Halterahmens (11) erstreckt.

16. Transportbehälter-Einrichtung nach Anspruch 14 oder 15, **dadurch gekennzeichnet, daß** der Absatz (24, 24a, 24b, 24c, 24d) im wesentlichen vollständig umlaufend ausgebildet ist.

17. Transportbehälter-Einrichtung nach einem der Ansprüche 14 bis 16, **dadurch gekennzeichnet, daß** die Führungsflächen (24b, 24d) an dem Absatz (24) angeordnet sind.

18. Transportbehälter-Einrichtung nach einem der vorangegangenen Ansprüche, **dadurch gekennzeichnet, daß** sich die Führungsflächen (24b, 24d) im wesentlichen über die gesamte Länge der Längsschenkel (14b, 14d) des Halterahmens (11) erstrecken.

19. Transportbehälter-Einrichtung nach einem der vorangegangenen Ansprüche, **dadurch gekennzeichnet, daß** die Führungsflächen (24b, 24d) ein Gleitlager für eine geführte Bewegung der Schwenklagerstelle (31) hin zu der Schwenkwiderlagerstelle (32) bereitstellen.

## Claims

1. Transport-container arrangement (10) for vehicles, such as, for example, a through-loading arrangement, particularly for installation in the seat backrest or boot wall of passenger cars, said arrangement having a supporting frame (11) which is integral with the vehicle and in which an installable frame (13) of a transport container (12), such as a ski bag, cold-storage module, games console or the like, can be inserted, wherein a swivel-bearing point (31) is associated with the installable frame and a swivelling-abutment point (32) is associated with the supporting frame, wherein said installable frame (13) can be swivelled into its installed position (Fig. 10) about the swivelling axis (33) thus formed, and wherein at least one shiftable bolting element (28), which is disposed at a distance from said swivelling axis (33) when the installable frame is in the installed situation, is provided for fastening the installable frame to the supporting frame in a detachable manner,
**characterised in that** the swivel-bearing point (31) is disposed in a region (43) of an edge (31) of the installable frame (13) which is the leading edge when a movement in which said frame is inserted occurs; the swivelling axis (33) extending substantially parallel to the marginal region; supporting faces (22e, 22f) which protrude beyond the clear width (b) of the supporting frame (11) in the direction of the swivelling axis (33) being disposed in the region of the swivel-bearing point (31); and guide faces (24b, 24d) for said supporting faces (22e, 22f) being disposed on said supporting frame (11).

2. Transport-container arrangement according to Claim 1, **characterised in that** the supporting frame (11) is of circumferential construction and comprises two longitudinal legs (14b, 14d) and also two transverse legs (14a, 14c).

3. Transport-container arrangement according to Claim 1 or 2, **characterised in that** the installable frame (13) is of circumferential construction and comprises two longitudinal legs (17b, 17d) and also two transverse legs (17a, 17c).

4. Transport-container arrangement according to one of Claims 1 to 3, **characterised in that** the swivelling axis (33) is orientated substantially horizontally.

5. Transport-container arrangement according to one of Claims 1 to 4, **characterised in that** the swivelling axis (33) is disposed in the region of a lower leg (17a) of the installable frame (13).

6. Transport-container arrangement according to one of the preceding claims, **characterised in that** the installable frame (13) has a collar-like marginal flange (23).

7. Transport-container arrangement according to Claim 6, **characterised in that** the marginal flange (23) extends at least along two longitudinal legs (17b, 17d) and one transverse leg (17c) of the installable frame (13).

8. Transport-container arrangement according to Claim 6 or 7, **characterised in that** the marginal flange (23) is substantially of completely circumferential construction.

9. Transport-container arrangement according to one of Claims 6 to 8, **characterised in that** the swivel-bearing point (31) is disposed on the marginal flange (23).

10. Transport-container arrangement according to Claim 9, **characterised in that** the swivel-bearing point (31) is formed by a free edge of the marginal flange (23).

11. Transport-container arrangement according to one of Claims 6 to 10, **characterised in that** the supporting faces (22a, 22f) are disposed on the marginal flange (23).

12. Transport-container arrangement according to one of the preceding claims, **characterised in that** the supporting faces (22e, 22f) are disposed in such a way that they prevent the installable frame, and in particular a slip-in end (43) of said installable frame (13), from penetrating through said supporting frame (11).

13. Transport-container arrangement according to one of the preceding claims, **characterised in that** the supporting faces (22e, 22f) are disposed in such a way that, in the course of a movement in which the installable frame (13) is inserted in the supporting frame (11), they limit a swivelling movement of the slip-in end (43) of the installable frame (13) substantially to a region within an envelope curve of the supporting frame (11).

14. Transport-container arrangement according to one of the preceding claims, **characterised in that** the supporting frame has a step-like offset (24, 24a, 24b, 24c, 24d).

15. Transport-container arrangement according to Claim 14, **characterised in that** the offset (24, 24a, 24b, 24c, 24d) extends at least along two longitudinal legs and one transverse leg of the supporting frame (11).

16. Transport-container arrangement according to Claim 14 or 15, **characterised in that** the offset (24, 24a, 24b, 24c, 24d) is substantially of completely circumferential construction.

17. Transport-container arrangement according to one of Claims 14 to 16, **characterised in that** the guide faces (24b, 24d) are disposed on the offset (24) .

18. Transport-container arrangement according to one of the preceding claims, **characterised in that** the guide faces (24b, 24d) extend substantially over the entire length of the longitudinal legs (14b, 14d) of the supporting frame (11).

19. Transport-container arrangement according to one of the preceding claims, **characterised in that** the guide faces (24b, 24d) provide a sliding bearing for a guided movement of the swivel-bearing point (31) towards the swivelling-abutment point (32).

## Revendications

1. Dispositif pour récipient de transport (10) pour des véhicules, tel que, par exemple, dispositif de chargement traversant, en particulier pour le montage, côté paroi de dossier ou de coffre à bagages dans des voitures particulières, avec un cadre de maintien (11) fixé au véhicule, dans lequel un cadre d'introduction (13) d'un récipient de transport (12), tel qu'un sac à skis, un module de refroidissement, une console de jeux ou analogue, est susceptible d'être inséré, sachant que, au cadre d'insertion est associé un point de palier de pivotement (31) et, au cadre de maintien est associé un point de contre-palier de pivotement (32), le cadre d'introduction (13) étant susceptible de pivoter autour de l'axe de pivotement (33) ainsi formé, pour passer à sa position de montage (Fig. 10), et où au moins un élément de verrou (28) déplaçable, qui, en situation de montage du cadre d'introduction, est disposé à distance de l'axe de pivotement (33), est prévu pour assurer une fixation désolidarisable du cadre d'introduction sur le cadre de maintien, **caractérisé en ce que** le point de palier de pivotement (31) est disposé dans une zone (43) d'un bord (31), qui, lors d'un déplacement d'introduction, est situé à l'avant, du cadre d'introduction (13), l'axe de pivotement (33) s'étendant sensiblement parallèlement à la zone de bordure, sachant que, dans la zone du point de palier de pivotement (31), sont disposées des faces de maintien (22e, 22f), sortant de la largeur libre (b) du cadre de maintien (11) en direction de l'axe de pivotement (33), et des faces de guidage (24b, 24d), pour les faces de maintien (22e, 22f), étant disposées sur le cadre de maintien (11).

2. Dispositif pour récipient de transport selon la revendication 1, **caractérisé en ce que** le cadre de maintien (11) est conformé en faisant le pourtour et comprend deux branches longitudinales (14b, 14d), ainsi que deux branches transversales (14a, 14c).

3. Dispositif pour récipient de transport selon la revendication 1 ou 2, **caractérisé en ce que** le cadre de maintien (13) est conformé en faisant le pourtour et comprend deux branches longitudinales (17b, 17d), ainsi que deux branches transversales (17a, 17c).

4. Dispositif pour récipient de transport selon l'une des revendications 1 à 3, **caractérisé en ce que** l'axe de pivotement (33) est orienté sensiblement horizontalement.

5. Dispositif pour récipient de transport selon l'une des revendications 1 à 4, **caractérisé en ce que** l'axe de pivotement (33) est disposé dans la zone d'une branche inférieure de cadre (17a) du cadre de montage (13).

6. Dispositif pour récipient de transport selon l'une des revendications précédentes, **caractérisé en ce que** le cadre d'introduction (13) présente un rebord de bordure (23) du genre d'une collerette.

7. Dispositif pour récipient de transport selon la revendication 6, **caractérisé en ce que** le rebord de bordure (23) s'étend le long au moins de deux branches longitudinales (17b, 17d) et d'une branche transversale (17c) du cadre d'introduction (13).

8. Dispositif pour récipient de transport selon la revendication 6 ou 7, **caractérisé en ce que** le rebord de bordure (23) est réalisé en faisant pratiquement complètement le pourtour.

9. Dispositif pour récipient de transport selon l'une des revendications 6 à 8 précédentes, **caractérisé en ce que** le point de palier de pivotement (31) est disposé sur le rebord de bordure (23).

10. Dispositif pour récipient de transport selon la revendication 9, **caractérisé en ce que** le point de palier de pivotement (31) est formé par une arête libre du rebord de bordure (23).

11. Dispositif pour récipient de transport selon l'une des revendications 6 à 10, **caractérisé en ce que** les faces de maintien (22a, 22f) sont disposées sur le rebord de bordure (23).

12. Dispositif pour récipient de transport selon l'une des revendications précédentes, **caractérisé en ce que** les faces de maintien (22e, 22f) sont disposées de manière à empêcher une pénétration du cadre d'introduction, en particulier d'une extrémité d'enfichage (43) du cadre d'introduction (13), à travers le cadre de maintien (11).

13. Dispositif pour récipient de transport selon l'une des revendications précédentes, **caractérisé en ce que** les faces de maintien (22e, 22f) sont disposées de manière que, en cas de déplacement d'insertion du cadre d'introduction (13) dans le cadre de maintien (11), elles limitent un mouvement de pivotement de l'extrémité d'enfichage (43) du cadre d'introduction (13), sensiblement à une zone située à l'intérieur d'une courbe enveloppe du cadre de maintien (11).

14. Dispositif pour récipient de transport selon l'une des revendications précédentes, **caractérisé en ce que** le cadre de maintien présente un décrochage (24, 24a, 24b, 24c, 24d) du genre d'un gradin.

15. Dispositif pour récipient de transport selon la revendication 14, **caractérisé en ce que** le décrochage (24, 24a, 24b, 24c, 24d) s'étend au moins le long de deux branches longitudinales et d'une branche transversale du cadre de maintien (11).

16. Dispositif pour récipient de transport selon la revendication 14 ou 15, **caractérisé en ce que** le décrochage (24, 24a, 24b, 24c, 24d) est réalisé en faisant pratiquement la totalité du pourtour.

17. Dispositif pour récipient de transport selon l'une des revendications 14 à 16, **caractérisé en ce que** les faces de guidage (24b, 24d) sont disposées sur le décrochage (24).

18. Dispositif pour récipient de transport selon l'une des revendications précédentes, **caractérisé en ce que** les faces de guidage (24b, 24d) s'étendent sensiblement sur la totalité de la longueur des branches longitudinales (14b, 14d) du cadre de maintien (11).

19. Dispositif pour récipient de transport selon l'une des revendications précédentes, **caractérisé en ce que** les faces de guidage (24b, 24d) fournissent un palier à glissement, pour un déplacement guidé du point de palier de pivotement (31) par rapport au point de contre-palier de pivotement (32).
